# EUROPEAN PATENT APPLICATION

(11) **EP 4 588 754 A1**
(43) Date of publication of application: **23.07.2025**
(21) Application number: 23797819.2
(22) Date of filing: 12.09.2023
(51) Int. Cl.: B62B 1/10, B62B 5/04, B62B 1/00

(54) **SHOPPING BASKET WITH A BUILT-IN LOCKING SYSTEM**

(30) Priority: 15.09.2022 ES 202231503 U
(71) Applicant: Shopping Basket, 08036 Barcelona (ES)
(72) Inventor: DEL SOLAR CONTRERAS, Santiago, 08036 Barcelona (ES)
(74) Representative: Balder IP Law, S.L.
(86) International application number: PCT/ES2023/070550
(87) International publication number: WO 2024/056926

(57) **Abstract**

The invention relates to a shopping basket comprising: a container, a handle solidly attached to one of the side walls of the container, a pair of wheels for moving the basket on the floor, and a support surface for supporting on the floor, arranged under the outer face of the base, the support surface being flat and parallel to a plane that contains the axis of the wheels. The distance between said plane and the support surface is equal to or greater than the radius of the wheels, and the support surface is configured such that the basket can adopt a resting position, in which the basket rests on the floor in a stable manner by means of said support surface, the wheels being raised with respect to the floor or flush therewith, such that in said resting position, the movement of the basket on the wheels is hampered by the support surface.

## Description

### OBJECT OF THE INVENTION

The invention relates to a shopping basket of the kind traditionally used in retail establishments such as supermarkets, and of the kind that move in an inclined position by means of a pair of wheels.

An object of the invention is to provide a shopping basket of the aforementioned type, which is capable of adopting a resting position on the floor in which the normal rotation of the wheels is hampered or stopped.

### STATE OF THE ART

The use of shopping baskets with wheels for use in self-service retail establishments, as an alternative to larger size trolleys, is known.

Conventionally, these types of baskets are made up of a container to contain the products, normally made of plastic, with a handle attached to the container for pulling and handling the basket, which can be fixed to and form an integral part of the container itself, or can consist of a telescopic handle that is coupled to the container.

Regarding the mode of movement of the basket, two types of baskets can be distinguished: those that have two pairs of wheels and move in a vertical position with respect to the floor (the base of the basket is parallel to the floor) and those that have a single pair of wheels and move in an inclined position while the user holds them by means of the handle.

In the second type of baskets mentioned, i.e., those that have a single pair of wheels, they can be placed in a resting position on the floor when their movement is not required, for which these baskets have a pair of support legs, having generally a small size, such that the basket can rest on the floor in a stable position.

Baskets of this type have the problem that in the aforementioned resting position, the basket tends to move easily on the floor, making it difficult to keep the basket in the desired position, for example to introduce products therein, which is an inconvenience for the user when shopping, with this problem worsening when the basket is almost empty and weighs little.

Another drawback of baskets of this type appears when they are put on an escalator, since the steps of such escalators have neither sufficient depth nor surface area to support the wheels and legs at the same time, so it is not possible for the basket to self-support on the escalators, requiring the user to hold them manually.

### DESCRIPTION OF THE INVENTION

The invention solves the aforementioned problems by means of combining the features of the attached claim 1.

In particular, the invention relates to a shopping basket which conventionally comprises: a container or basket *per* se for housing products formed by side walls and a lower base, a handle solidly attached to one of the side walls, and a pair of wheels for moving the basket on the floor, coaxially arranged on the lower face of the base and close to the side wall that has the handle. The handle can be of any type, either integrally formed with the container or it can consist of an independent body attached to the container.

According to the invention, the basket is provided with a locking system comprising a support surface arranged below the lower face of the base, the support surface being flat and parallel to a plane containing the axis of the wheels. The distance between said plane and the support surface is equal to or greater than the radius of the wheels.

Furthermore, the support surface is configured such that the basket can adopt a resting position, in which the basket rests on the floor in a stable manner by means of said support surface, the wheels being raised with respect to the floor or flush therewith, such that in said resting position, the normal movement of the basket on the wheels is prevented by the support surface since the wheels are raised with respect to the floor, or slightly in contact with the floor.

The basket is also configured such that it can adopt a traveling position, in which it can be moved on the floor by means of the wheels in an inclined position in the traditional manner, and in which the support surface is raised with respect to the floor, i.e., without contacting the floor, to allow the normal rotation of the wheels.

The support surface can be implemented in various ways, for example, the support surface can be unitary, i.e., it is a single surface, or it can be formed by two or more individual surfaces, all of them being coplanar.

The support surface is generally parallel to the base of the basket.

Preferably, the support surface is formed with a flexible material, in order to obtain a greater degree of adherence to the floor and therefore enhance the braking effect of the basket.

In a preferred embodiment, the basket has one or more independent bodies externally attached to the base of the container, and the support surface is formed in said at least one body. For example, the basket has two elongated bodies attached to the lower face of the base, and arranged parallel to one another and longitudinally with respect to the normal direction of movement of the basket.

Alternatively, the base of the container forms one or more extensions, and the support surface is formed in these extensions, and in a position in which they remain in contact with the floor while the basket is at rest.

### BRIEF DESCRIPTION OF THE FIGURES

To complete the description and in order to provide a better understanding of the invention, a set of drawings is provided, which form an integral part of the description and illustrate embodiments of the invention, which must not be construed as restricting the scope of the invention, but only as examples of the manner in which the invention can be carried out. The drawings comprise the following figures:
Figure 1 shows a bottom perspective view of a preferred embodiment of the basket of the invention.
Figure 2 shows another bottom perspective view of the preferred embodiment of Figure 1, with the brakes uncoupled to facilitate their identification.
Figure 3 shows in Figure 3A a side elevational view of the embodiment of the previous figures, and in Figure 3B an enlarged detailed view of the lower portion of the basket.
Figure 4 shows another side elevational view of the embodiment of the previous figures.
Figure 5 shows a lower plan view of the same preferred embodiment.

### PREFERRED EMBODIMENT OF THE INVENTION

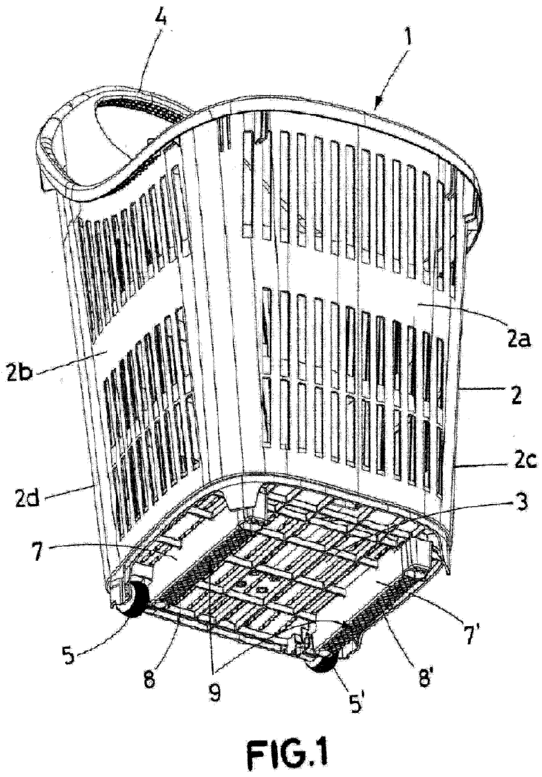

**Figure 1** shows a preferred embodiment of a shopping basket (1) with a built-in brake or locking system according to the invention, which conventionally comprises: a container (2) formed by four side walls, specifically a front wall (2a), a rear wall (2d) and two side walls (2b, 2c), all of them attached to a lower base (3).

The rear wall (2d) extends upwards to form a handle (4), which in this case is integrally formed together with the container (2) in the same mold in a known manner.

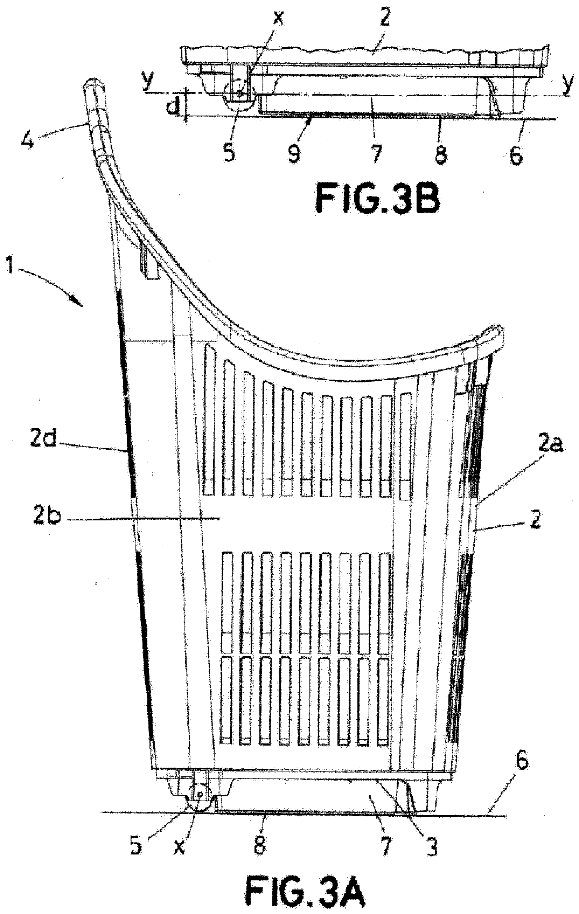

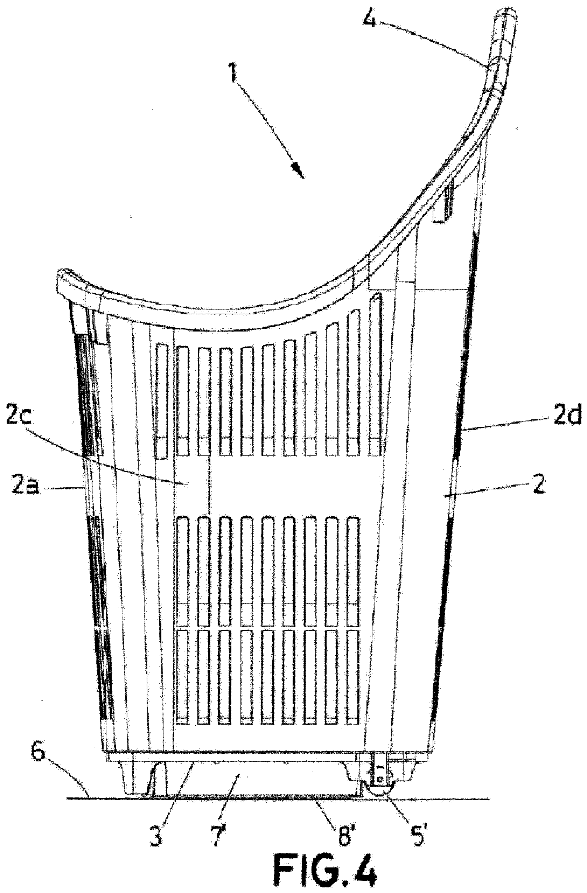

The basket (1) has a pair of wheels (5, 5') that are used to move the basket (1) on the floor (6) in the usual manner. The wheels (5, 5') are coaxially arranged with respect to an axis (X) on the outer face of the base (3), and close to the side wall that has the handle (4), i.e., close to the rear wall (2d) as best seen in **Figures 3** and **4****.**

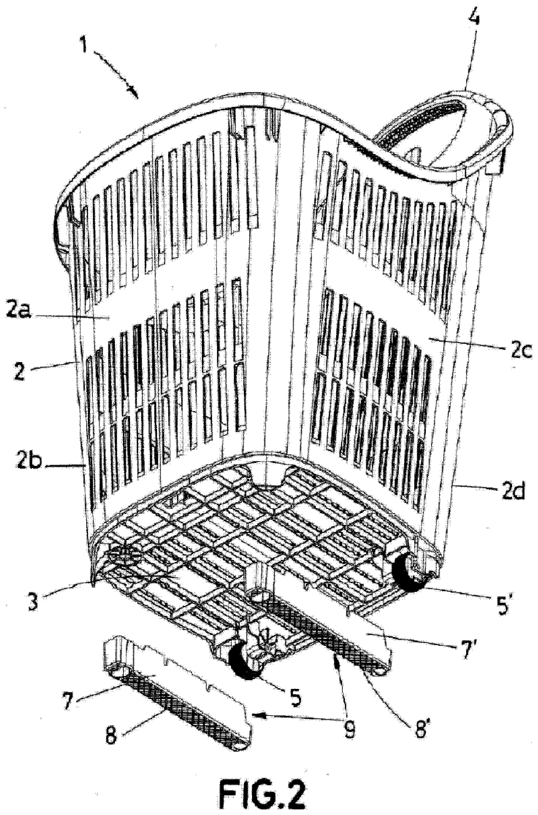

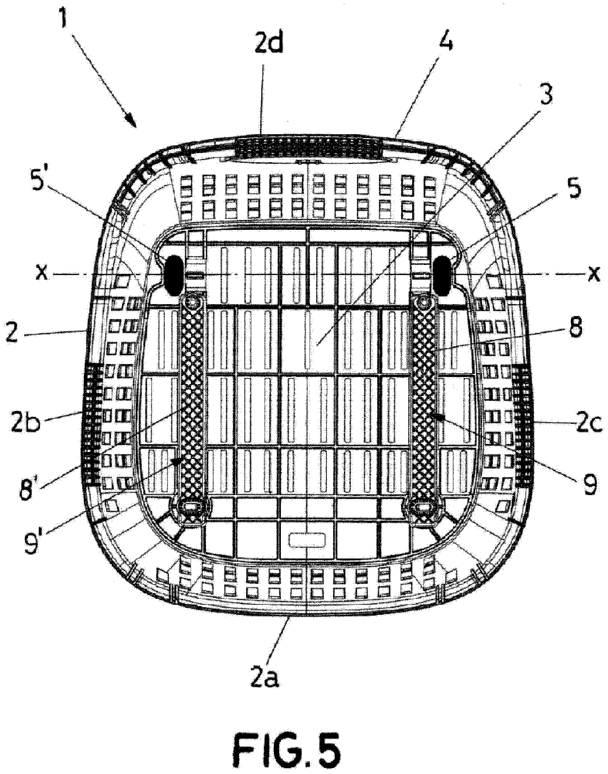

As seen in **Figures 1** and **2,** according to the invention, the basket (1) incorporates a pair of pads (7, 7') in the shape of elongated bodies attached to the outer face of the base (3), and arranged parallel to one another and longitudinally with respect to the normal direction of movement of the basket, as seen in **Figure 5**, when a user pulls the basket by means of the handle (4).

As shown in **Figure 5****,** the separation distance between the two pads (7, 7') is less than the separation distance between the wheels (5, 5').

The lower face (8, 8') of the two pads (7, 7'), i.e., the surfaces of the pads (7, 7') intended to contact the floor, jointly form a support surface (9) of the basket (1), which is arranged below the outer face of the base (3). This support surface (9) formed by the two lower faces (8, 8') is flat and parallel to a plane (Y) that contains the axis (X) of the wheels (5, 5'), and wherein the distance (d) between said plane (Y) and the support surface (9) is equal to or greater than the radius of the wheels (5, 5'), preferably greater than the radius of the wheels (5, 5'), as depicted in the enlarged detail view of **Figure 3B****.**

Furthermore, the support surface (9) is configured, i.e., it has such a shape and area, that the basket (1) can adopt a resting position, in which the basket rests on the floor (6) in a stable manner by means of said support surface, as can be seen in **Figures 3** and **4****,** the wheels (5, 5') being raised with respect to the floor (6) or flush therewith, such that in said resting position, the normal movement of the basket (1) on the wheels (5, 5') is hampered by the support surface (9).

In other preferred embodiments, the support surface (9) can be unitary and be formed in a single body, also with a shape and size such that the basket (1) can rest on the floor (6), with the wheels raised or flush therewith.

Preferably, the pads (7, 7') are entirely or partially made with a flexible material, such as, for example, silicone, rubber or polyethylene (PE) polymers.

As an alternative to the use of the pads (7, 7'), the actual base (3) of the basket can be formed with extensions (not shown) that perform the same function as the pads, and such that these extensions or a portion thereof can be coated by a flexible material.

Preferably, the length of the pads (7, 7') is at least 50% of the length of the base (3).

In the traveling position of the basket (1), it is inclined such that the only element in contact with the floor (6) are the wheels (5, 5') and the pads (7, 7') are raised with respect to the floor (6).

## Claims

1. A shopping basket with a built-in locking system, comprising:
a container formed by side walls and a lower base,
a handle solidly attached to one of the side walls,
a pair of wheels for moving the basket on the floor, arranged coaxially on the outer face of the base and close to the side wall that has the handle, **characterized in that** it further comprises a support surface for support on the ground, arranged below the outer face of the base, the support surface being flat and parallel to a plane containing the axis of the wheels, and
wherein the distance between said plane and the support surface is equal to or greater than the radius of the wheels, and
wherein the support surface is configured such that the basket can adopt a resting position, in which the basket rests on the floor in a stable manner by means of said support surface, the wheels being raised with respect to the floor or flush therewith, such that in said resting position, the movement of the basket on the wheels is hampered by the support surface.

2. The shopping basket with a built-in locking system according to claim 1, **characterized in that** the support surface is unitary or is formed by two or more coplanar individual surfaces.

3. The shopping basket with a built-in locking system according to claim 1 or 2, **characterized in that** the support surface is generally parallel to the base of the basket.

4. The shopping basket with a built-in locking system according to any of the preceding claims, **characterized in that** the support surface is formed with a flexible material.

5. The shopping basket with a built-in locking system according to any of the preceding claims, **characterized in that** it is configured such that it can adopt a traveling position, in which it rests and can move on the floor by means of the wheels, and in which the support surface is raised with respect to the floor.

6. The shopping basket with a built-in locking system according to any of the preceding claims, **characterized in that** the support surface is formed as an extension of the base of the container.

7. The shopping basket with a built-in locking system according to any of claims 1 to 5, **characterized in that** it has at least one elongated body independent of the container, which is attached to the lower face of the base, and **in that** the support surface is formed in said at least one elongated body.

8. The shopping basket with a built-in locking system according to claim 7, **characterized in that** it has two elongated bodies attached to the lower face of the base, and arranged parallel to one another and longitudinally with respect to the normal direction of movement of the basket.

9. The shopping basket with a built-in locking system according to claim 8, **characterized in that** the separation distance between the two elongated bodies is less than or equal to the separation distance between the wheels.

10. The shopping basket with a built-in locking system according to claim 8 or 9, **characterized in that** the length of the elongated bodies is at least 50% of the length of the base of the container.

11. The shopping basket with a built-in locking system according to any of claims 7 to 10, **characterized in that** the elongated bodies are pads entirely or partially made of a flexible material.
